Europäisches Patentamt

European Patent Office

Office européen des brevets

(19)

(11) Numéro de publication: **0 194 217**
**B1**

(12) # FASCICULE DE BREVET EUROPEEN

(45) Date de publication du fascicule du brevet:
**14.09.88**

(51) Int. Cl.⁴: **B 25 J 9/04,** B 25 J 19/00

(21) Numéro de dépôt: **86420066.2**

(22) Date de dépôt: **04.03.86**

(54) **Perfectionnements aux robots industriels du type à structure sphérique.**

(30) Priorité: **05.03.85 FR 8503392**

(43) Date de publication de la demande:
**10.09.86 Bulletin 86/37**

(45) Mention de la délivrance du brevet:
**14.09.88 Bulletin 88/37**

(84) Etats contractants désignés:
**CH DE GB LI SE**

(56) Documents cités:
**WO - A - 84/02301**
**FR - A - 2 450 673**
**GB - A - 1 393 349**

(73) Titulaire: **S.A. DES ETABLISSEMENTS STAUBLI (France), B.P. 20 183 Rue des Usines, F-74210 Faverges (FR)**

(72) Inventeur: **Palau, Joseph, Les Perris, F-74410 Duingt (FR)**

(74) ·Mandataire: **Monnier, Guy et al, Cabinet Monnier 150 Cours Lafayette B.P. 3058, F-69393 Lyon Cédex 03 (FR)**

**Description**

La présente invention a trait aux robots industriels ou manipulateurs du type à structure sphérique, comportant une tourelle orientable qui se déplace angulairement suivant l'axe («taille») d'une embase fixe et qui porte une culasse susceptible d'osciller suivant un axe perpendiculaire («épaule»), laquelle culasse supporte à coulissement le bras équipé en bout de la main porte-pièce ou porte-outil.

Dans la technique connue, l'embase des robots de ce type est construite concentriquement autour de l'axe vertical de rotation, en ce sens que ladite embase est formée par une pièce en forme de cloche dont l'espace intérieur est muni de roulements montés autour d'un axe orienté verticalement et qui occupe ainsi le centre de l'ensemble. Un tel agencement peut être satisfaisant lorsqu'on a affaire à des robots de petite taille, destinés à développer des puissances relativement réduites; par contre il n'en va pas de même quand il s'agit d'appareils manipulateurs de grande taille qui en cours d'utilisation impartissent à l'embase des efforts élevés de basculement. On conçoit que les oscillations consécutives à ces efforts de basculement nuisent à la fiabilité du robot et à la précision de son fonctionnement.

Une observation assez analogue peut être faite en ce qui concerne l'équilibrage du bras mobile par rapport à la culasse et à la tourelle. On comprend effectivement que pour le même effort de travail fourni par la main porte-pièce ou porte-outil, la culasse est soumise à des efforts qui varient suivant la position axiale de la main précitée par rapport à ladite culasse, c'est-à-dire en fonction de la position axiale du bras. Or ces variations ne peuvent être totalement compensées par les registres à ressorts ou autres systèmes compensateurs dont sont dotées les constructions connues, alors qu'elles impartissent des efforts de basculement et/ou de flexion à la tourelle qui supporte la culasse et à l'embase sur laquelle se déplace angulairement ladite tourelle.

C'est à ces inconvénients qu'entend principalement remédier la présente invention, laquelle consiste à réaliser l'embase sous la forme d'un ensemble cylindrique à grand diamètre dont l'un des bords repose sur un support fixe tandis que le bord opposé est équipé d'une couronne axiale profilée pour déterminer deux portées obliques opposées, lesquelles portées forment pistes pour deux séries de galets prévues sur la tourelle orientable.

On observera qu'un tel agencement permet d'obtenir une stabilité remarquable et en conséquence une résistance élevée aux efforts de basculement qui s'exercent sur l'embase lors du fonctionnement du robot.

D'autres caractéristiques remarquables de l'invention, relatives notamment au montage et à l'équilibrage du bras mobile à l'intérieur de la culasse, ressortiront de la description qui va suivre en référence au dessin annexé, lequel dessin, donné à titre d'exemple, permettra de mieux comprendre l'invention, les caractéristiques qu'elle présente et les avantages qu'elle est susceptible de procurer:

Fig. 1 est une vue en perspective montrant schématiquement l'agencement général d'un robot à structure sphérique établi conformément à l'invention.

Fig. 2 en est une coupe verticale partielle à plus grande échelle.

Fig. 3 est une coupe de détail illustrant le montage de la tourelle sur l'embase.

Fig. 4 et 5 sont des coupes verticales suivant les plans respectivement référencés IV-IV et V-V en fig. 2; on a indiqué en II-II en fig. 4 le plan de coupe de fig. 2.

Fig. 6 est une coupe de détail montrant le montage du chariot qui porte le bras du robot et du contrepoids d'équilibrage associé audit chariot.

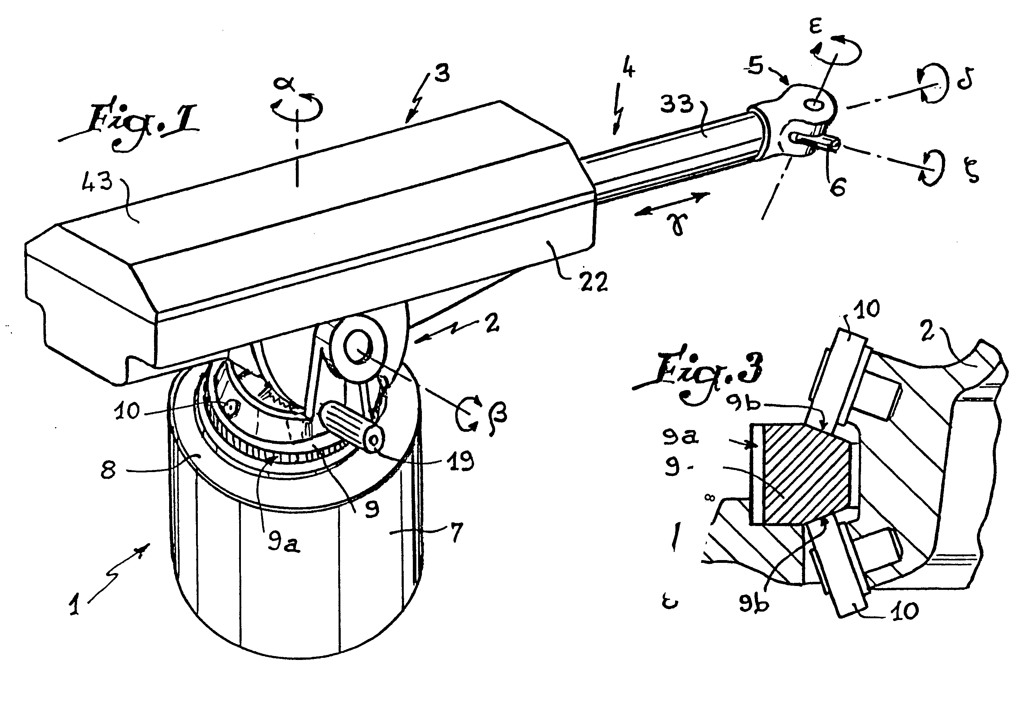

Le robot à structure sphérique tel que représenté en fig. 1 comprend une embase 1 propre à reposer sur le sol ou autre support, une tourelle 2 apte à se déplacer suivant un axe vertical $\alpha$, une culasse 3 articulée suivant un axe horizontal $\beta$, et un bras 4 qui est engagé à coulissement axial (direction $\gamma$) et qui porte en bout une main 5 susceptible de pivoter suivant un angle $\delta$, laquelle main est équipée d'un élément porte-outil ou porte-pièce 6 mobile suivant les deux angles $\varepsilon$ et $\zeta$.

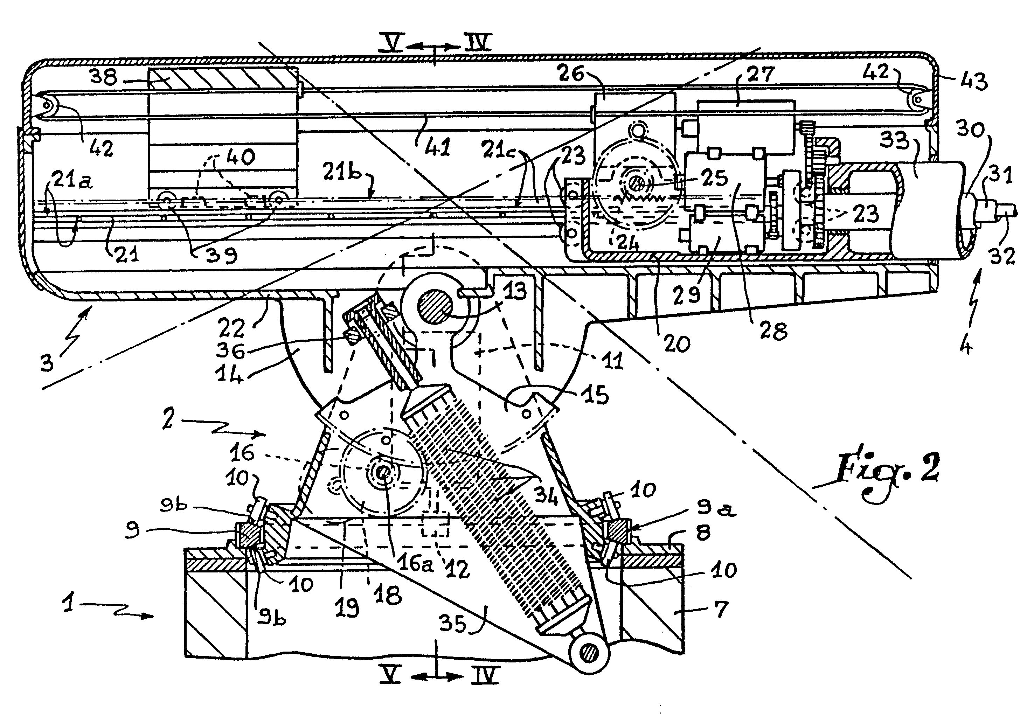

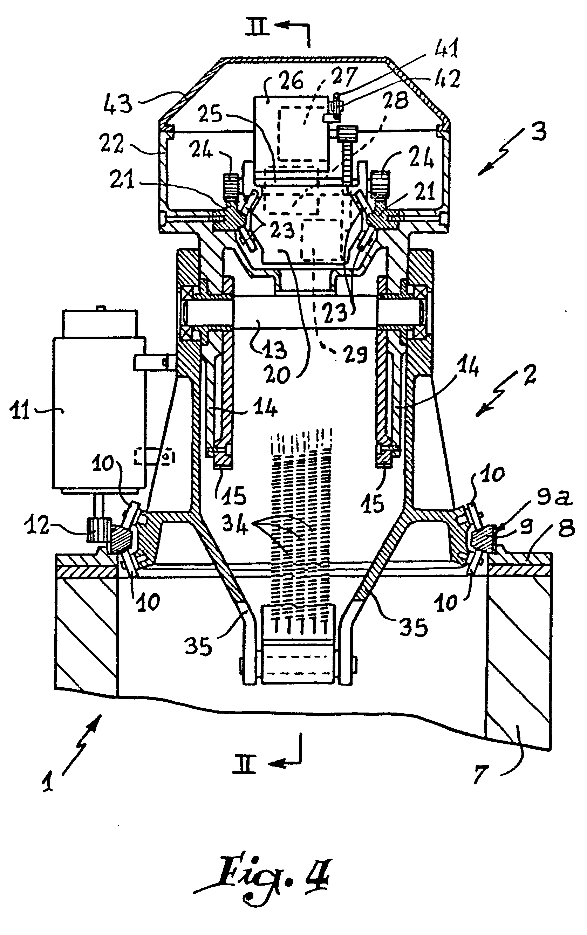

Comme plus particulièrement montré en fig. 2, l'embase 1 est constituée par un piétement cylindrique 7 réalisé en béton dans l'exemple de réalisation considéré. Contre le bord supérieur de ce piétement 7 est fixée, par l'intermédiaire d'une bague de centrage 8, une couronne 9 dentée extérieurement. A la manière représentée en détail en fig. 3, à l'opposé de sa denture extérieure 9a, la couronne 9 est profilée de façon à présenter deux portées 9b orientées obliquement vers le bas, respectivement vers le haut, et destinées à former pistes pour le roulement de deux séries de galets 10, lesquels sont montées sur la base de la tourelle 2.

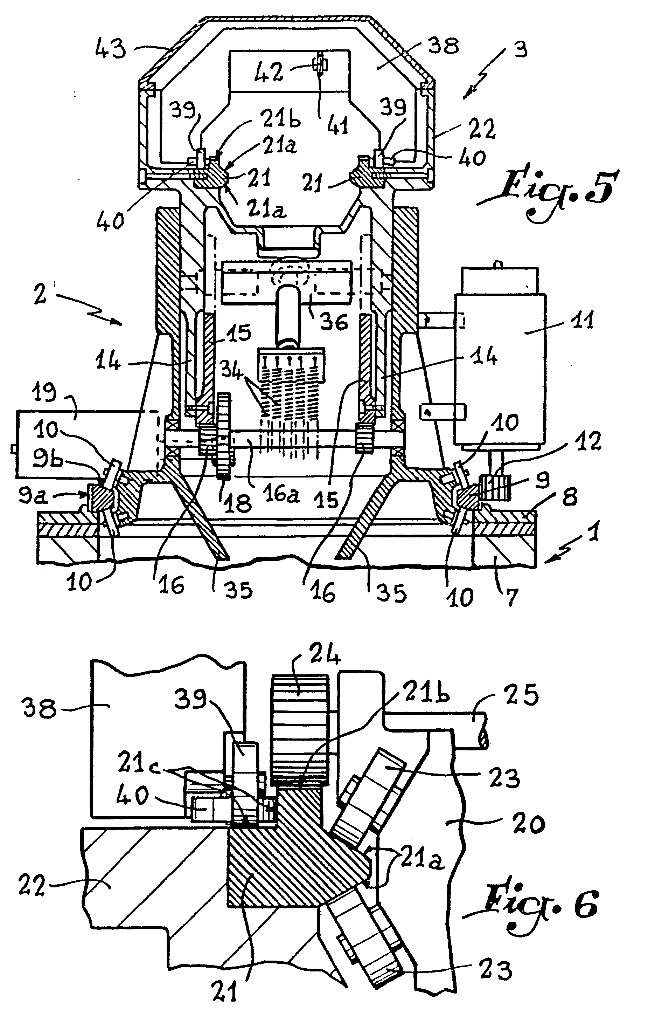

On conçoit que dans ces conditions cette tourelle 2 peut se déplacer angulairement par rapport à l'embase 1 qui, de par sa constitution, est à même de supporter sans fléchir des efforts de basculement très élevés. La rotation de la tourelle 2 est assurée à l'aide d'un moteur 11 à axe vertical (fig. 4 et 5) fixé latéralement sur ladite tourelle; l'arbre, tourné vers le bas, de ce moteur 11 porte en bout un pignon 12 qui engrène avec la denture 9a de la couronne 9.

Au voisinage de son sommet, la tourelle 2 supporte un arbre horizontal 13 (fig. 1, 2 et 4) solidaire de deux flasques verticaux 14 prévus à la base de la culasse 3. Contre ces flasques 14 sont rapportés deux secteurs dentés 15 qui engrènent avec des pignons 16 portés par un arbre commun 16a entraîné, avec interposition d'un mécanisme démultiplicateur 18, par un moteur 19 fixé latéralement contre la tourelle 2. On comprend que la commande de ce moteur 19 dans un sens ou dans l'autre permet d'opérer le basculement correspondant de la culasse 3 et du bras 4 porté par celle-ci.

Comme montré en fig. 2, le bras 4 est solidaire d'un chariot 20 apte à se déplacer le long de deux guides horizontaux 21 rapportés à l'intérieur du carter 22 qui forme la partie inférieure de la culasse 3. Comme montré en fig. 6, chaque guide 21 comporte deux portées obliques 21a destinées à former pistes de roulement pour deux séries de galets 23 prévues latéralement sur le chariot 20. Le déplacement de celui-ci le long des guides 21 est opéré à l'aide de deux pignons 24 qui engrènent avec une denture ou crémaillère 21b ménagée sur le bord supérieur de chacun des guides précités, l'arbre 25 sur lequel sont calés lesdits pignons 24 étant entraîné par un moteur 26 (fig. 2) à travers un mécanisme réducteur approprié.

Ce moteur 26, en même temps que les moteurs 27, 28 et 29 qui sont destinés à assurer la commande en rotation des trois organes co-axiaux 30, 31, 32 de la main 5 et de l'élément porte-outil ou porte-pièce 6, sont bien entendu montés sur le chariot 20, immédiatement en arrière de l'extrémité, solidaire dudit chariot, du tube 33 qui constitue le bras 4, ledit tube renfermant les trois organes sus-mentionnés.

Afin de compenser le poids en porte-à-faux de l'ensemble 3-4 du robot, on a logé à l'intérieur de la tourelle 2 un registre à ressorts 34 dont la base est fixée à deux oreilles inférieures 35 solidaires de ladite tourelle, tandis que son sommet vient s'attacher en 36 (fig. 5) au fond du carter 22 de la culasse 3.

Par ailleurs, pour compenser les efforts variables exercés sur la tourelle 2 par le déplacement longitudinal du chariot 20 et du bras 4, on prévoit un contrepoids mobile 38 en forme d'étrier, conformé de manière à pouvoir circuler au-dessus des quatres moteurs portés par le chariot susmentionné. Comme plus particulièrement montré en fig. 6, la base de chacune des branches du contrepoids 38 est équipée d'une part de deux galets 39 à axe horizontal, d'autre part de deux galets 40 à axe vertical; ces galets 39 et 40 circulent le long de deux portées ou pistes 21c ménagées sur chaque guide 21 à l'opposé des portées ou pistes 21a destinées au guidage du chariot 20.

La liaison entre le chariot 20 et le contrepoids 38 est opérée à l'aide d'un câble sans fin 41 (fig. 2) renvoyé par des poulies 42 amarrées contre les parois verticales opposées d'un couvercle 43 qui ferme vers le haut le carter 22 de la culasse 3. Comme montré, le brin inférieur de ce câble sans fin 41 est attaché au chariot 20 par l'intermédiaire du moteur 26 porté par celui-ci, tandis que le brin supérieur est fixé au contrepoids 38, si bien que tout déplacement dudit chariot provoque un déplacement identique, mais en sens opposé, du contrepoids 38.

On comprend que grâce à cette compensation parfaitement précise, on peut obtenir que le bras 3 du robot applique à l'arbre de rotation 13 de la culasse sur la tourelle un couple constant à toutes les positions axiales dudit bras, en évitant de la sorte que ledit arbre 13 soit soumis à des variations susceptibles d'impartir de brusques à-coups.

## Revendications

1. Robot industriel du type à structure sphérique, du genre comprenant une embase fixe (1), une tourelle (2) orientable suivant l'axe de ladite embase, une culasse (3) montée à basculement sur ladite tourelle suivant un axe (13) perpendiculaire à celui de l'embase, et un bras (4) mobile par rapport à ladite culasse et pourvu d'un élément porte-pièce ou porte-outil (6) susceptible de se déplacer suivant des orientations distinctes, caractérisé en ce que l'embase (1) est réalisée sous la forme d'un ensemble cylindrique (7–8) dont un bord est destiné à reposer sur un support fixe tandis que le bord opposé est équipé d'une couronne axiale (9) profilée pour déterminer deux portées obliques (9b) opposées, lesquelles portées forment pistes de roulement pour deux séries de galets (10) prévues sur la tourelle (2).

2. Robot suivant la revendication 1, caractérisé en ce que la couronne axiale (9) comporte une denture latérale (9a) qui coopère avec un pignon (12) entraîné par un moteur (11) rapporté latéralement contre la tourelle (2) afin d'assurer le déplacement angulaire de celle-ci suivant l'axe de l'embase (1).

3. Robot suivant l'une quelconque des revendications 1 et 2, caractérisé en ce que la partie inférieure de la culasse (3) est solidaire de deux secteurs dentés (15) qui engrènent avec des pignons (16) entraînés par un moteur (19), de façon à assurer le déplacement angulaire de ladite culasse autour de son axe de basculement (13).

4. Robot suivant l'une quelconque des revendications 1 à 3, caractérisé en ce qu'à l'opposé de l'élément porte-outil ou porte-pièce (6), le bras (3) est solidaire d'un chariot (20) sur lequel sont fixés le moteur (26) qui assure le déplacement longitudinal dudit chariot, ainsi que les moteurs (27, 28, 29) qui opèrent l'actionnement angulaire de l'élément précité (6), un contrepoids mobile (38) étant lié cinématiquement audit chariot (20) de façon à se déplacer en même temps que ledit chariot mais en sens inverse.

5. Robot suivant la revendication 4, caractérisé en ce que le chariot (20) et le contrepoids (38) sont pourvus de galets (23, 39, 40) qui roulent sur des portées ou pistes (21a, 21c) ménagées sur deux guides communs (21) prévus longitudinalement dans la culasse (3).

6. Robot suivant la revendication 5, caractérisé en ce que le contrepoids (38) est établi à un profil en forme d'étrier de façon à pouvoir passer par dessus le chariot (20).

7. Robot suivant l'une quelconque des revendications 4 à 6, caractérisé en ce que la liaison entre le chariot (20) et le contrepoids (38) est assurée par un câble sans fin (41) renvoyé à l'intérieur de la culasse (3) et dont les brins sont attachés l'un audit chariot, l'autre au contrepoids.

8. Robot suivant l'une quelconque des revendications 5 à 7, caractérisé en ce que le moteur (26) destiné au déplacement longitudinal du chariot (20) et du contrepoids (38) associé à celui-ci entraîne deux pignons (24) qui engrènent avec une denture ou crémaillère (21b) prévue sur chacun des deux guides communs (21).

9. Robot suivant l'une quelconque des revendications 1 à 8, caractérisé en ce que la culasse (3) est reliée à la tourelle (2) par un compensateur (34).

## Patentansprüche

1. Industrieroboter vom Typ mit sphärischer Struktur von der Art, welche eine feste Befestigungsfläche (1), einen gemäss der Achse der genannten Befestigungsfläche ausrichtbaren Revolverkopf (2), ein Jochteil (3), welches um eine zu der Achse der Befestigungsfläche senkrechte Achse an dem genannten Revolverkopf verschwenkbar angebracht ist, und einen Arm (4) umfasst, der in bezug auf den genannten Revolverkopf bewegbar und mit einem Teilhalteelement oder Werkzeughalteelement (6) ausgerüstet ist, welches sich gemäss bestimmter Orientierungen bewegen kann, dadurch gekennzeichnet, dass die Befestigungsfläche (1) in der Form einer zylindrischen Gesamtheit (7–8) ausgebildet ist, von der ein Rand dazu dient, auf einer festen Stütze zu ruhen, während der entgegengesetzte Rand mit einer axialen Krone (9) mit einem Profil versehen ist, um zwei entgegengesetzte, schräge Lagerflächen (9b) zu bestimmen, wobei diese Lagerflächen Laufbahnen für zwei Reihen von Rollen (10) bilden, die an dem Revolverkopf (2) vorgesehen sind.

2. Roboter nach Anspruch 1, dadurch gekennzeichnet, dass der axiale Kranz (9) eine seitliche Zahnung (9a) aufweist, die mit einem Ritzel (12) zusammenarbeitet, welches von einem seitlich an dem Revolverkopf (2) angebrachten Motor (11) antreibbar ist, um eine Winkelbewegung desselben um die Achse der Befestigungsfläche (1) sicherzustellen.

3. Roboter nach irgendeinem der Ansprüche 1 oder 2, dadurch gekennzeichnet, dass der untere Abschnitt des Querjoches (3) fest mit zwei gezahnten Sektoren (15) verbunden ist, die in zwei Ritzel (16) eingreifen, die von einem Motor (19) derart antreibbar sind, dass eine Winkelbewegung des genannten Querjoches um seine Schwenkachse (13) sichergestellt ist.

4. Roboter nach irgendeinem der Ansprüche 1 bis 3, dadurch gekennzeichnet, dass im Gegenteil zu dem Werkzeughalteelement oder dem Teilhalteelement (6) der Arm (4) fest mit einem Schlitten verbunden ist, an dem der Motor (26), der die Längsverschiebung des Schlittens sicherstellt, sowie die Motoren (27, 28, 29) angebracht sind, die die winkelmässige Betätigung des vorgenannten Elements (6) hervorrufen, wobei ein bewegbares Gegengewicht (38) kinematisch mit dem genannten Schlitten (20) derart verbunden ist, dass es sich gleichzeitig mit dem genannten Schlitten jedoch im umgekehrten Sinn bewegt.

5. Roboter nach Anspruch 4, dadurch gekennzeichnet, dass der Schlitten (20) und das Gegengewicht (38) mit Rollen (23, 39, 40) versehen sind, die auf Lagerflächen oder Laufbahnen (21a, 21c) rollen, die an zwei in Längsrichtung in dem Querjoch (3) vorgesehenen, gemeinsamen Führungen (21) ausgebildet sind.

6. Roboter nach Anspruch 5, dadurch gekennzeichnet, dass das Gegengewicht (38) an einem bügelförmigen Profil derart angebracht ist, dass es sich über dem Schlitten (20) bewegen kann.

7. Roboter nach irgendeinem der Ansprüche 4 bis 6, dadurch gekennzeichnet, dass die Verbindung zwischen dem Schlitten (20) und dem Gegengewicht (38) von einem endlosen, in das Innere des Querjochs (3) zurückgeführten Seil (41) sichergestellt ist, von dessen Seilenden eines an dem genannten Schlitten und das andere an dem Gegengewicht angebracht ist.

8. Roboter nach irgendeinem der Ansprüche 5 bis 7, dadurch gekennzeichnet, dass der zur Längsbewegung des Schlittens (20) und des diesem zugeordneten Gegengewichts (38) vorgesehene Motor (26) zwei Ritzel (24) antreibt, die mit einer an jeder der zwei gemeinsamen Führungen (21) vorgesehenen Zahnung oder Zahnstange (21b) eingreifen.

9. Roboter nach irgendeinem der Ansprüche 1 bis 8, dadurch gekennzeichnet, dass das Querjoch (3) über einen Ausgleicher (34) mit dem Revolverkopf (2) verbunden ist.

## Claims

1. Industrial robot of the type having a spherical structure, of the sort comprising a fixed seat (1), a turret head (2) which can be directed along the axis of said seat, a head (3) mounted so as to pivot on said turret head along an axis (13) perpendicular to that of the seat, and an arm (4) which is movable with respect to said head and provided with a component- or tool-holding element (6) capable of moving in distinct directions, characterised in that the seat (1) is designed in the form of a cylindrical unit (7–8), one edge of which is intended to rest on a fixed support while the opposite edge is equipped with a profiled axial ring (9) to produce two opposing oblique bearing surfaces (9b), which bearing surfaces form rolling tracks for two series of rollers (10) for which provision is made on the turret head (2).

2. Robot according to claim 1, characterised in that the axial ring (9) comprises lateral teeth (9a) which cooperate with a pinion (12) driven by a motor (11) constructed laterally against the turret head (2) in order to ensure the angular movement of the latter along the axis of the seat (1).

3. Robot according to any one of claims 1 and 2, characterised in that the lower part of the head (3) is integral with two toothed sectors (15) which engage with pinions (16) driven by a motor (19) so as to ensure the angular movement of said head about its swivel axle (13).

4. Robot according to any one of claims 1 to 3, characterised in that on the side opposite the tool- or component-holding element (6), the arm (4) is integral with a carriage (20) on which are fixed the motor (26) which ensures the longitudinal movement of said carriage and the motors (27, 28, 29) which implement the angular activation of the afore-mentioned element (6), a movable counterweight (38) being connected kinematically to said carriage (20) so as to move at the same time as said carriage but in the opposite direction.

5. Robot according to claim 4, characterised in that the carriage (20) and the counterweight (38) are provided with rollers (23, 39, 40) which roll on bearing surfaces or tracks (21a, 21c) made in two common guides (21) provided longitudinally in the head (3).

6. Robot according to claim 5, characterised in that the counterweight (38) is set up in a profile in the form of a stirrup so as to be able to pass over the carriage (20).

7. Robot according to any one of claims 4 to 6, characterised in that the connection between the carriage (20) and the counterweight (38) is provided by a continuous cable (41) in a loop inside the head (3), the strands of which are attached one to said carriage, the other to the counterweight.

8. Robot according to any one of claims 5 to 7, characterised in that the motor (26) for longitudinally moving the carriage (20) and the counterweight (38) associated with the latter drives two pinions (24) which engage with teeth or a rack (21b) provided on each of the two common guides (21).

9. Robot according to one of claims 1 to 8, characterised in that the head (3) is connected to the turret head (2) by a compensator (34).

*Fig.1*

*Fig.3*

0194217

Fig. 2

*Fig. 4*

Fig. 5

Fig. 6